# EUROPEAN PATENT SPECIFICATION

(11) **EP 2 536 959 B1**
(45) Date of publication and mention of the grant of the patent: **17.04.2019**
(21) Application number: 11759766.6
(22) Date of filing: 18.02.2011
(51) Int. Cl.: F16D 11/16, F16D 1/112, B66D 1/14

(54) **CONSTRUCTION OF A ROTATABLE SHAFT**
KONSTRUKTION EINER DREHBAREN WELLE
CONSTRUCTION D'UN ARBRE ROTATIF

(30) Priority: 18.02.2010 NO 20100248
(43) Date of publication of application: 26.12.2012
(73) Proprietor: I.P. Huse AS, 6487 Haroy (NO)
(72) Inventor: MOLNES, Kjetil, N-6487 Harøy (NO)
(74) Representative: Acapo AS
(86) International application number: PCT/NO2011/000063
(87) International publication number: WO 2011/119035

(56) References cited:
- FR-A1- 2 664 339
- FR-A1- 2 868 489
- US-A- 4 244 455
- US-A- 4 927 286
- US-A- 4 927 286

## Description

The present invention relates to a new device for a coupling that is adapted to release the torque on a driveshaft.

The invention also relates to applications of the device.

With the invention one aims, in general, to provide a coupling unit for a driveshaft which is constructed to be able to be used to quickly disengage a first section of the driveshaft from a second section of the driveshaft. Meant by quickly is that the disengagement from the full connection for a common rotation of the two shaft sections to that only one of them rotates takes place immediately, instantaneously or approximately instantaneously.

With the present invention one aims, in particular, at a coupling construction of the above mentioned type for use in connection with towing and anchor handling winches. In such winches, it is desirable with a coupling that can quickly disengage the torque even when there is a full torque from the driveshaft.

This means that one aims for a construction that can contribute to the ingoing shaft from the winch continuing to rotate while the outgoing shaft stops completely, and that this disengagement takes place immediately.

With regard to prior art, reference is made to the US4244455 which describes a connection where a first shaft part and a second shaft part are mutually connected via a coupling body. The connection and disengagement between the two shaft parts take place in the axial direction with the help of locking bodies that are activated with the help of the coupling body. The one shaft part is inserted into the second shaft part, and the coupling body can readjust a number of locking bodies from a position where they couple together the shaft parts to a position where they are disengaged from each other. The locking body itself is a cylinder-formed element in a cutout through the one shaft part and can be displaced in an axial cutout in the second shaft part by an axial displacement of the coupling body.

US4927286 A disclose a rapid connection between two shafts, one of which terminates in a hollow socket and the other in an elongated stem in which the socket comprises, on one hand, a fixed inner block having inclined surfaces for cooperation with corresponding surfaces of a pyramidal head of the stem, and, on the other hand, axial locking pins extending through the wall of the socket and elastically urged inwardly of the socket but retained in a retracted position in the wall so long as the socket is empty, while the stem comprises in the vicinity of said pyramidal head means for unblocking the pins and notches for receiving the pins in the position thereof for axially locking the two shafts to each other.

According to the invention, a device for a rotatable shaft that is driven by a drive body, such as a winch, is provided. Said shaft is composed of a first shaft part and a second shaft part, and a coupling body coupled to the shaft parts, being set up to readjust the shaft parts from a mode where they are coupled together for a possible common rotation, and a mode where they are rotationally disengaged and independent of each other. The second shaft part is inserted into the first shaft part which is in the shape of a casing, and the coupling body is set up to adjust a number of locking bodies from a position where the locking bodies rotationally couple together the two shaft parts, and a position where the two shaft parts are mutually rotationally disengaged. Each locking body is a carrier wedge arranged in a boring through the casing-formed first shaft part and set up to be pushed in a radial direction into a recess in the second shaft part by an axial displacement of the coupling body. The end of the carrier wedge that lies against the coupling body comprises a wedge-formed tapered shaped cam that cooperates with a correspondingly formed inclined recess in the coupling body so that an axial displacement of the coupling body is converted into a radial movement of the carrier wedge, to effect said disengagement of the two shaft parts.

These and other preferred embodiments of the device are described in the subsequent dependent claims 2-9.

The coupling body can be a locking casing arranged to be displaced axially and to influence a number of carrier wedges set up in connection to the through-going borings and recesses around the circumference of the respective first and second shaft parts, and particularly preferred is 18 carrier wedges arranged in associated borings/recesses.

Each recess in the second shaft part can be formed with dimensions in the axial direction and the circumference breadth, and also with a bottom surface that is adjusted to the dimensions of a carrier wedge and also to a through-going boring in the end piece of the first shaft part.

Each recess in the second shaft part (12) can be formed with an inclined surface that forms a flank angle α with a line r that runs radially through the center of the shaft.

The flank angle α is preferably of the order of 15 to 30 degrees, as it is set so that a force is established in the radial direction which is large enough to push the carrier wedge in a radial direction, but not so large that one risks that the wedges lock the casing when the friction is too large between the wedge and this.

The locking casing can be driven hydraulically or electrically.

The device can be set up for permanent connection of the shaft parts as the normal mode of operation and for disengagement of the connection when an emergency situation occurs.

According to the invention the inventive device is applied in constructions where there is a need for an instantaneous and immediate disengagement of rotating parts that are coupled together in a machine system, and particularly preferred in connection to a ship, such as during anchor handling and towing operations, where the disengagement is initiated when unforeseen incidents occur that places the operation of the ship in danger, for example, that unwanted, extremely high wire or chain tensions arise with the risk of the ship capsizing.

The invention shall be explained in more detail in the following with reference to the subsequent figures, in which:
The figures 1 and 2 show an axial section and a cross section, respectively, of the coupling according to a preferred embodiment of the invention, and where it is connected to an outgoing shaft and an ingoing shaft, and where the coupling is set to a locking engagement between the two shafts so that these rotate together.

The figures 3 and 4 show a corresponding axial section and cross section of the coupling mentioned above and where the coupling is set so that the locking engagement is cancelled and the shafts are disengaged from each other and can rotate freely, independently of each other.
Figure 5 shows a perspective section of the circular end piece of the ingoing shaft.

Figure 6 shows a cross section of one of the recesses that is bored out from the surface of the end piece shown in figure 5.

The figures 7 and 8 shows a first and a second perspective (in an x-ray drawing) of a carrier wedge which is set up to be moved in a groove in the end piece of the outgoing shaft and which is set up to be pushed into the recesses described in connection with figure 6.

Figure 9 shows the end piece of the outgoing shaft with said through-going groove to hold the carrier wedges in place.

Figure 10 shows a cross section through the locking casing, the function of which is to push or hold the wedges so that they form an engagement connection between the outgoing and ingoing shafts.

Figure 11 shows a perspective of the locking casing.

The figures 12, 13 and 14 show the disengagement between the first and the second shaft parts in three steps, i.e. how the carrier wedge associated to the first shaft part is pushed out of the engagement with the second shaft part so that the disengagement takes place.

The figures 15 and 16 show enlarged sections from figures 1 and 2 to show how the locking casing influences the position of a carrier wedge.

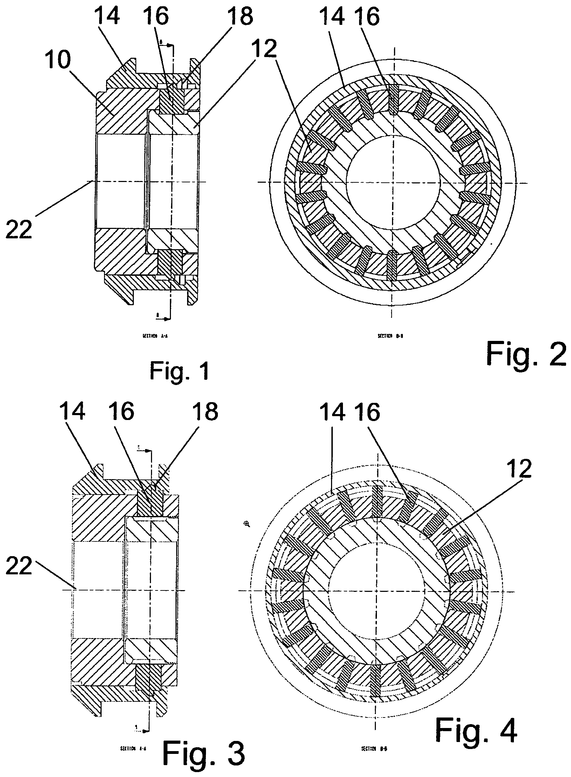

Initially, reference is made to figures 1 and 2 to explain the construction according to the invention.

Figure 1 shows an axial section of the area where a first shaft part 10 and a second shaft part 12 are coupled together with the help of the inventive coupling device that comprises an axially displaceable locking casing 14, and a number of carrier wedges 16 that, by a radial movement, are set up to form the locking connection that can be disengaged between the two shaft parts 10 and 12.

The shaft parts 10,12 are constructed so that the end piece of the first shaft part 10 forms a hollow casing form set up to receive the corresponding end piece of the second shaft part 12.

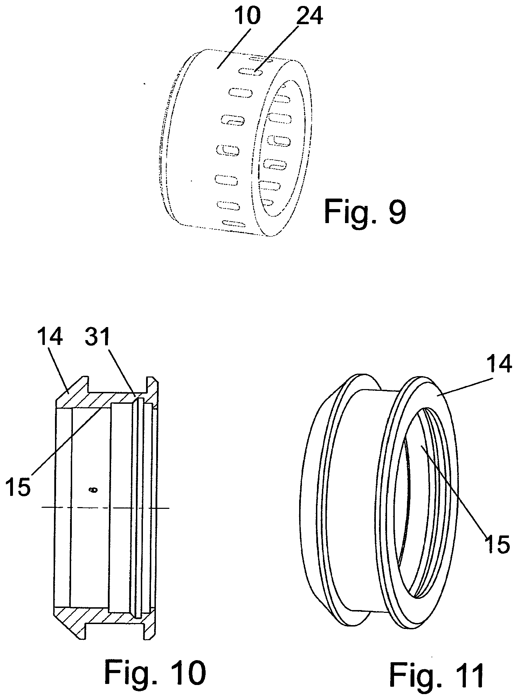

The casing formed end piece of the first shaft part 10 is shown in figure 9 and a number of through-going borings/grooves 24, mutually spaced apart between each groove, are bored out through the wall of the casing around the whole of the circumference. In the form shown, the grooves are made with an extended form in the axial direction.

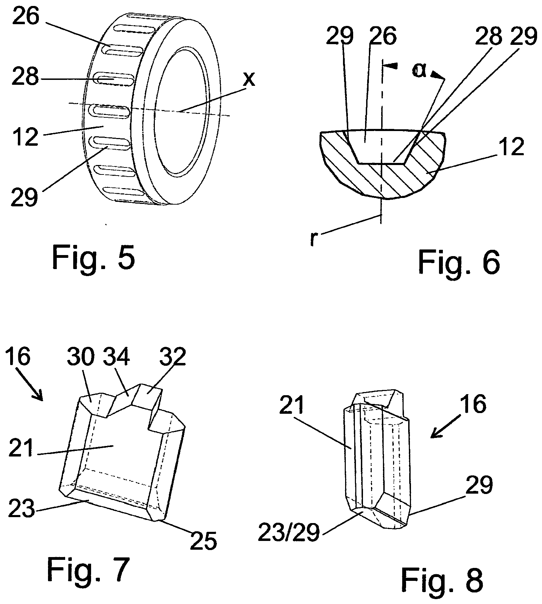

The casing-formed end piece of the second shaft part 12 is shown in figure 5. A number of recesses 26 are cut into the outer surface of the wall around the whole circumference. Each recess has a bottom in the wall material indicated by 28. In the form shown the recesses 26 are made in an extended shape in the axial direction, i.e. parallel to the axis of rotation x, corresponding to the through-going borings in the end piece of the first shaft part 10.

A cross section of such an axially directed recess 26 with its flat bottom 28 is shown in figure 6. Furthermore, the axially directed walls 29 of the recesses 26 are formed in a tapered shape and form a flank angle **α** with a line that runs radially through the centre 22 of the shaft. The flank angle **α** is preferably of the order of 15 to 30 degrees. The angle of the inclining surface/flank 29 must be set so that a force is set up in a radial direction, which is large enough to displace the carrier wedge. At the same time, the force must not be so large that one risks the wedges getting stuck to the casing when the friction is too large. Tests have shown that an angle of the order of 15 to 30 degrees is suitable.

In the figures 1, 3, 5 and 9 it can be seen that there are 18 such borings and recesses in the first and second shaft parts, respectively. The number of borings and recesses can vary according to the dimensions of the connection. The borings 24 and recesses 26 in the respective end pieces are formed with the same mutual distance around the circumference. When the second end piece 24 is placed inside the first end piece, the borings and the recesses can lie level with each other for the placing/settling of the carrier wedges 16 so that they are locked to each other.

When the two shaft parts are locked to each other for common rotation as shown in figures 1 and 2, each carrier wedge 16 is engaged through the borings 24 (fig. 9) and lies with its bottom end against the bottom in 28 in its respective recess 26 (fig.5). The figures 3 and 4 show the carrier wedges pushed out of the recesses so that the two shaft parts are disengaged from each other.

Figures 7 and 8 show an x-ray perspective of an appropriate embodiment of a carrier wedge 16. It has a cubic shape with a cross section that is adapted to a boring 24 in the first shaft part 10 (the first shaft). The wedge has straight side surfaces 21 that tilt inwards at 23 towards a flat bottom part 25.

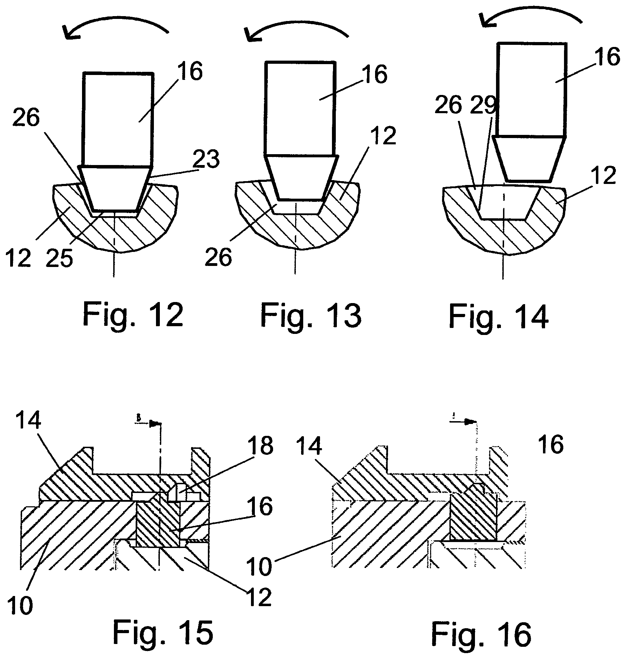

The inclined surface 23 and the bottom surface 23 also have, according to figure 12, approximately the same outline as each recess 26 in the second shaft part 12 (ingoing shaft).

The upper side of the carrier wedge is shown most clearly in figure 7 in addition to figures 1 and 3 and it forms a straight surface 30 with an upwardly extending cam 32 with an inclined, tilting surface 34 that is set up to cooperate with or be pushed by the inner side 15 of the locking casing 14.

The carrier wedge 16 is consequently arranged in a boring in the outgoing shaft and can move radially. The one side fits into the groove in the ingoing shaft and the other side fits into the groove in the locking casing. It has an inclined surface that fits the locking casing to activate the coupling by pushing the casing axially.

The carrier wedge 16 is arranged to move in the boring 24 in the first outgoing shaft 10 and is arranged to be pushed so that it goes through a radial movement so that the bottom of the wedge glides into the recess 26 in the second shaft part and locks these together.

The locking casing 14 is also shown in a vertical section in figure 10 and in a perspective in figure 11 and has around its internal circumference a correspondingly shaped inclined surface with a complimentary outline to each carrier wedge. This means also that it comprises a recessed hollow space 18 in the radial direction and an inclining surface complimentary to the inclined surface of the wedge. The radial extension of the recess/hollow space 18/31 internally in the casing corresponds to the height of the cam 32/34 on the carrier wedge 16.

The length of the wedge 16, the total radial extension of the recess 26 and the groove 24 up to the underside of the locking casing are closely fitted to the length of the wedge so that the wedge lies securely fixed and forms the locking between the two shaft parts.

Furthermore, the radial height of the recess 18 is somewhat larger than the depth of the groove 26 in the second shaft part.

It is this situation that is shown in the figures 1 and 15. The locking casing is in a fixed position, the engagement between the shaft parts is established for common rotation. It is this that is the normal operative state of the system. When an emergency situation arises, it is important to be able to quickly disengage the locking between the two shafts. This takes place in that the locking casing 14 is pushed back in the axial direction x, i.e. towards the left in the figure. The force which the wedges 16 is experiencing in the radial direction leads to all the carrier wedges being displaced radially outwards so that the top of the cam finally ends up in and fills the internally recessed ring-formed hollow space 18. It is the inclining surface 29 which forms said angle a, which contributes to the radial force that pushes the carrier wedge outward. Finally, (the situation in figure 14) the bottom side of the carrier wedge lies clear of the outer circumference surface of the second shaft part 12 and the common rotation ceases.

The figures 12, 13, and 14 show the stepwise events that happen with the engagement of the carrier wedge with the second shaft part when the locking casing 14 is pushed to the left and where the direction of rotation is shown with an arrow. In figure 12, the wedge is placed in the bottom of the recess for said common rotation. In figure 13 the wedge is pushed halfway out of the recess and lies against the right inclining surface in the recess. In figure 14 the wedge is pushed all the way up from the recess and is disengaged from the engagement. The shaft part, which is connected to the winch, continues to rotate while the second shaft part stops completely and is free to rotate both ways independently of the winch. To be able to push the carrier wedge up from the recess when the shaft parts rotate together, it is necessary that each recess comprises inclining flanks with an angle a. It is this angle α that leads to one getting a resultant, which pushes the carrier wedge up from the recess.

According to the example, it is preferred that the first shaft part 10 is formed as a casing while the second shaft part 12 is a pipe or a cylindrical form set up to be inserted into the first casing part. The parts comprise mutually fitted borings and recesses, respectively, which lie level with a suitable mutual rotation of the parts. When the parts shall be connected together, they are brought together and the locking casing is pushed to the right with a simultaneous mutual rotation between the parts so that the wedges (numbering 18 around the circumference) can be pushed down into respective recesses in the second shaft part and establishes the locking.

The locking casing is set up to be pushed hydraulically, but electrical drive means or other types of actuators can also be used.

This connection functions as a so-called "Emergency release" connection, something that means that it is used to release a load when critical situations arise.

The construction is particularly suited as an extra precaution in connection with anchor handling and towing operations. If, in such situations, unforeseen incidents happen which place the ship in danger, for example, that unwanted extreme wire and chain tensions arise with a risk of the ship capsizing, the disengagement can occur approximately immediately so that said tension force ceases.

The inventive construction can be used in all constructions where there is a need for a spontaneous and immediate disengagement of coupled, rotating parts in a machine system.

## Claims

1. Device for a rotatable shaft that is driven by a drive body, such as a winch, said shaft is composed of a first shaft part (10) and a second shaft part (12), and a coupling body (14) coupled to the shaft parts, being set up to readjust the shaft parts (10,12) from a mode where they are coupled together for a possible common rotation, and a mode where they are rotationally disengaged and independent of each other, wherein
the second shaft part (12) is inserted into the first shaft part (10) which is in the shape of a casing, and the coupling body (14) is set up to adjust a number of locking bodies (16) from a position where the locking bodies (16) rotationally couple together the two shaft parts (10,12), and a position where the two shaft parts (10,12 are mutually rotationally disengaged, wherein
each locking body (16) is a carrier wedge (16) arranged in a boring (24) through the casing-formed first shaft part (10) and set up to be pushed in a radial direction into a recess (26) in the second shaft part (12) by an axial displacement of the coupling body (14), and wherein
the end of the carrier wedge (16) that lies against the coupling body (14) comprises a wedge-formed tapered shaped cam (32) that cooperates with a correspondingly formed inclined recess (18) in the coupling body (14) so that an axial displacement of the coupling body (14) is converted into a radial movement of the carrier wedge, to effect said disengagement of the two shaft parts (10,12).

2. Device according to claims 1, wherein the coupling body (14) is a locking casing arranged to be displaced axially and to influence a number of carrier wedges set up in connection to the through-going borings (24) and recesses (2) around the circumference of the respective first (10) and second (12) shaft parts, and particularly preferred is 18 carrier wedges arranged in associated borings/recesses (24/26).

3. Device according to any of claims 1-2, wherein each recess (26) in the second shaft part (12) is formed with dimensions in the axial direction and the circumference breadth, and also with a bottom surface that is adjusted to the dimensions of a carrier wedge and also to a through-going boring (24) in the end piece of the first shaft part (10).

4. Device according to any of the preceding claims, wherein each recess (26) in the second shaft part (12) is formed with an inclined surface that forms a flank angle α with a line r that runs radially through the center (22) of the shaft.

5. Device according to any of the preceding claims, wherein the flank angle α is preferably of the order of 15 to 30 degrees, as it is set so that a force is established in the radial direction which is large enough to push the carrier wedge (16) in a radial direction, but not so large that one risks that the wedges lock the casing when the friction is too large between the wedge (16) and this.

6. Device according to any of the preceding claims, wherein the locking casing (14) is driven hydraulically or electrically.

7. Device according to any of the preceding claims, wherein it is set up for permanent connection of the shaft parts (10 and 12, respectively) as the normal mode of operation and for disengagement of the connection when an emergency situation occurs.

8. Application of the device according to claims 1-7, in constructions where there is a need for immediate and spontaneous disengagement of coupled rotating parts in a machine system.

9. Application of the device according to claims 1-7, in connection with ships, such as during anchor handling and towing operations, where the disengagement is initiated when unforeseen incidents that put the operation of the ship at risk occur, for example, that unwanted extreme high tensions in wires or chains arise with a risk of the ship capsizing.

## Patentansprüche

1. Vorrichtung für eine drehbare Welle, die durch einen Antriebskörper wie zum Beispiel eine Winde angetrieben wird, wobei die Welle aus einem ersten Wellenteil (10) und einem zweiten Wellenteil (12) und einem mit den Wellenteilen gekoppelten Kopplungskörper (14) besteht, der so aufgebaut ist, dass er die Wellenteile (10, 12) aus einer Betriebsart, in der sie für eine mögliche gemeinsame Drehung miteinander gekoppelt sind, und einer Betriebsart, in der sie drehgelöst und unabhängig voneinander sind, verstellt, wobei
der zweite Wellenteil (12) in den ersten Wellenteil (10), der die Form eines Gehäuses aufweist, eingesetzt wird und der Kopplungskörper (14) so aufgebaut ist, dass er eine Anzahl von Verriegelungskörpern (16) aus einer Position, in der die Verriegelungskörper (16) die beiden Wellenteile (10, 12) drehbar miteinander koppeln, in eine Position einstellt, in der die beiden Wellenteile (10, 12) voneinander drehgelöst sind, wobei
jeder Verriegelungskörper (16) ein in einer Bohrung (24) durch den als Gehäuse ausgebildeten ersten Wellenteil (10) angeordneter Trägerkeil (16) ist und so aufgebaut ist, dass er durch eine Axialverschiebung des Kopplungskörpers (14) in eine radiale Richtung in eine Vertiefung (26) in dem zweiten Wellenteil (12) geschoben wird, und wobei
das an dem Kopplungskörper (14) anliegende Ende des Trägerkeils (16) einen als Keil ausgebildeten, konisch geformten Nocken (32) aufweist, der mit einer entsprechend ausgebildeten geneigten Vertiefung (18) in dem Kopplungskörper (14) so zusammenwirkt, dass eine Axialverschiebung des Kopplungskörpers (14) in eine Radialbewegung des Trägerkeils umgewandelt wird, so dass das Lösen der beiden Wellenteile (10, 12) bewirkt wird.

2. Vorrichtung nach Anspruch 1, wobei der Kopplungskörper (14) ein Verriegelungsgehäuse ist, das so angeordnet ist, dass es axial verschoben wird und eine Anzahl von Trägerkeilen beeinflusst, die in Verbindung mit den Durchgangsbohrungen (24) und Vertiefungen (2) um den Umfang des jeweiligen ersten (10) und zweiten (12) Wellenteils aufgebaut sind, und in zugehörigen Bohrungen/Vertiefungen (24/26) angeordnete 18 Trägerkeile besonders bevorzugt werden.

3. Vorrichtung nach einem beliebigen der Ansprüche 1 bis 2, wobei jede Vertiefung (26) in dem zweiten Wellenteil (12) mit Abmessungen in der Axialrichtung und der Umfangsbreite und außerdem mit einer an die Abmessungen eines Trägerkeils und außerdem an eine Durchgangsbohrung (24) in dem Endstück des ersten Wellenteils (10) angepassten unteren Fläche ausgebildet ist.

4. Vorrichtung nach einem beliebigen der vorhergehenden Ansprüche, wobei jede Vertiefung (26) in dem zweiten Wellenteil (12) mit einer geneigten Fläche ausgebildet ist, die einen Flankenwinkel α mit einer radial durch die Mitte (22) der Welle verlaufenden Geraden r ausbildet.

5. Vorrichtung nach einem beliebigen der vorhergehenden Ansprüche, wobei der Flankenwinkel α vorzugsweise die Größenordnung von 15 bis 30 Grad aufweist, da er so festgelegt ist, dass eine Kraft in der Radialrichtung aufgebaut wird, die groß genug ist, den Trägerkeil (16) in eine Radialrichtung zu schieben, jedoch nicht so groß, dass die Gefahr besteht, dass die Keile das Gehäuse verriegeln, wenn die Reibung zwischen dem Keil (16) und diesem zu groß ist.

6. Vorrichtung nach einem beliebigen der vorhergehenden Ansprüche, wobei das Verriegelungsgehäuse (14) hydraulisch oder elektrisch angetrieben wird.

7. Vorrichtung nach einem beliebigen der vorhergehenden Ansprüche, wobei diese für eine dauerhafte Verbindung der Wellenteile (10 bzw. 12) als normale Betriebsart und für ein Lösen der Verbindung in einer Notsituation aufgebaut ist.

8. Anwendung der Vorrichtung nach den Ansprüchen 1 bis 7 in Konstruktionen, in denen ein Bedarf an einem unverzüglichen und spontanen Lösen gekoppelter Drehteile in einem Maschinensystem besteht.

9. Anwendung der Vorrichtung nach den Ansprüchen 1 bis 7 in Verbindung mit Schiffen wie zum Beispiel bei Ankerhandhabungs- und Schleppvorgängen, bei denen das Lösen eingeleitet wird, wenn unvorhergesehene Ereignisse auftreten, die den Betrieb des Schiffs gefährden, beispielsweise dass unerwünschte, extreme, hohe Spannungen in Seilen oder Ketten mit einer Gefahr des Kenterns des Schiffs auftreten.

## Revendications

1. Dispositif pour un arbre rotatif entraîné par un corps d'entraînement, comme un treuil, ledit arbre étant composé d'une première partie d'arbre (10) et d'une seconde partie d'arbre (12), et d'un corps de raccordement (14) raccordé aux parties d'arbre, conçu de manière à réajuster les parties d'arbre (10, 12) à partir d'un mode où elles sont raccordées ensemble pour une rotation commune possible, et un mode où elles sont désengagées en rotation et indépendantes l'une de l'autre, dans lequel
la seconde partie d'arbre (12) est insérée dans la première partie d'arbre (10) qui présente la forme d'un boîtier, et le corps de raccordement (14) est conçu afin d'ajuster un nombre de corps de verrouillage (16) depuis une position où les corps de verrouillage (16) relient en rotation ensemble les deux parties d'arbre (10, 12), et une position où les deux parties d'arbre (10, 12) sont réciproquement désengagées en rotation, dans lequel
chaque corps de verrouillage (16) est une cale de support (16) agencée dans un alésage (24) à travers la première partie d'arbre formée en boîtier (10) et conçue afin d'être poussée dans une direction radiale dans une cavité (26) dans la seconde partie d'arbre (12) par un déplacement axial du corps de raccordement (14), et dans lequel
l'extrémité de la cale de support (16) qui s'appuie contre le corps de raccordement (14) comprend une came de forme conique en forme de cale (32) qui coopère avec une cavité inclinée formée de manière correspondante (18) dans le corps de raccordement (14) de sorte qu'un déplacement axial du corps de raccordement (14) est converti en un mouvement radial de la cale de support, afin d'effectuer ledit désengagement des deux parties d'arbre (10, 12).

2. Dispositif selon la revendication 1, dans lequel le corps de raccordement (14) est un boîtier de verrouillage agencé afin d'être déplacé de manière axiale et afin d'influencer un certain nombre de cales de support établies en connexion avec les alésages traversants (24) et les cavités (2) autour de la circonférence de la première (10) et de la seconde (12) parties d'arbre, et le dispositif particulièrement préféré est un ensemble de 18 cales de support dans des alésages/cavités associés (24/26).

3. Dispositif selon l'une quelconque des revendications 1 à 2, dans lequel chaque cavité (26) dans la seconde partie d'arbre (12) est formée avec des dimensions dans la direction axiale et la largeur de circonférence, et également avec une surface inférieure qui est ajustée aux dimensions d'une cale de support et également à un alésage traversant (24) dans la pièce d'extrémité de la première partie d'arbre (10).

4. Dispositif selon l'une quelconque des revendications précédentes, dans lequel chaque cavité (26) dans la seconde partie d'arbre (12) est formée avec une surface inclinée qui forme un angle de flanc α avec une ligne r qui s'étend radialement à travers le centre (22) de l'arbre.

5. Dispositif selon l'une quelconque des revendications précédentes, dans lequel l'angle de flanc α est de préférence de l'ordre de 15 à 30 degrés, comme cela est établi de sorte qu'une force soit établie dans la direction radiale qui soit suffisamment grande afin de pousser la cale de support (16) dans une direction radiale, mais pas trop grande afin de risquer que les cales ne bloquent le boîtier lorsque le frottement est trop important entre la cale (16) et celui-ci.

6. Dispositif selon l'une quelconque des revendications précédentes, dans lequel le boîtier de verrouillage (14) est commandé hydrauliquement ou électriquement.

7. Dispositif selon l'une quelconque des revendications précédentes, dans lequel il est conçu pour un raccordement permanent des parties d'arbre (10 et 12, respectivement) en mode de fonctionnement normal et afin de se désengager du raccordement lorsqu'une situation d'urgence se produit.

8. Application du dispositif selon les revendications 1 à 7, dans des constructions où un désengagement immédiat et spontané des parties rotatives raccordées est nécessaire dans un système de machine.

9. Application du dispositif selon les revendications 1 à 7, en connexion avec des bateaux, comme pendant la manipulation de l'ancre et les opérations de remorquage, où le désengagement débute lorsque des incidents imprévus qui mettent le fonctionnement du bateau en péril se produisent, par exemple, lorsque des tensions extrêmement élevées indésirables des câbles ou des chaînes se produisent avec un risque de chavirement du bateau.
